Europäisches Patentamt

European Patent Office

Office européen des brevets

(19)

(11) Publication number: **0 219 038 B1**

(12) **EUROPEAN PATENT SPECIFICATION**

(45) Date of publication of patent specification: **31.07.91**  (51) Int. Cl.⁵: **G21C 3/32**

(21) Application number: **86113853.5**

(22) Date of filing: **07.10.86**

(54) Nuclear fuel assembly.

(30) Priority: **16.10.85 SE 8504811**

(43) Date of publication of application:
**22.04.87 Bulletin 87/17**

(45) Publication of the grant of the patent:
**31.07.91 Bulletin 91/31**

(84) Designated Contracting States:
**BE CH DE GB IT LI NL**

(56) References cited:
**EP-A- 0 065 238**
**EP-A- 0 086 427**
**EP-A- 0 099 322**

(73) Proprietor: **AB ASEA-ATOM**

**S-721 83 Västeras(SE)**

(72) Inventor: **Blomstrand, Jan**
**Kallvallagatan 10**
**S-722 40 Västeras(SE)**
Inventor: **Junkrans, Sigvard**
**Renvaegen 1**
**S-722 31 Vaesteras(SE)**
Inventor: **Nylund, Olov**
**Ragnaroeksgatan 17, Box 17051**
**S-720 17 Vaesteras(SE)**

(74) Representative: **Boecker, Joachim, Dr.-Ing.**
**Rathenauplatz 2-8**
**W-6000 Frankfurt a.M. 1(DE)**

## Description

The invention relates to a nuclear fuel assembly according to the precharacterising part of claim 1. Fuel assemblies of this kind are known, for example, form EP-B-0 036 142 and EP-B-0 050 837.

These known fuel assemblies comprise sixty four fuel rods per assembly with the rods being divided into four groups, so-called sub-bundles, each one containing 4x4 fuel rods. In supplied fuel assemblies of this known kind, the cladding tubes of the fuel rods have a maximum external diameter of 12,25 mm and a minimum external diameter of 11,63 mm and a wall thickness within the interval of 0,74 - 0,80 mm. The fuel pellets in the fuel rods have a diameter within the interval of 9,94 - 10,44 mm and their diameters are about 0,20 mm smaller than the interval diameter of the cladding tube. The distance between the envelope surfaces of two adjacent fuel rods, arranged in the same row is between 3,55 and 3,87 mm in each sub-bundle. The width of that part of the channel for water which is located between two adjacently positioned sub-bundles is, in the supplied fuel assemblies, at most 5,8 mm and at least 4 mm.

From EP-A-0 099 322 a fuel assembly is known having a larger number of fuel rods than 4x4 in each sub-bundle while maintaining the external dimensions of the fuel assembly in order to reduce the linear load on the fuel rod, that is, the power per unit of length of the rod, and hence the risk of the cladding tube being damaged by stresses caused by fuel pellets during operation of the reactor. The EP-A-0 099 322 recommends the use of about 80 fuel rods in the fuel assembly and describes various geometric patterns for positioning the fuel rods in the duel assembly and its sub-bundles. Among them there are fuel assemblies which included a sub-bundle containing 5x5 fuel rods. It is also stated in this patent document that it is not considered advantageous to increase the number of fuel assemblies to such an extent that the total number of fuel rods in the assembly becomes 100 (with four sub-bundles of 5x5 rods) in place of 64. The difficulties of using a total of 100 fuel rods in the assembly consists in achieving an acceptable reactivity without the pressure fall in the assembly becoming too great.

The invention aims at a nuclear fuel assembly of the above-mentioned kind allowing the accommodation of 100 fuel rods in a fuel channel without encountering the difficulties described above.

To achieve this aim the invention suggests a nuclear fuel assembly according to the introductory part of claim 1, which is characterized by the features of the characterizing part of claim 1.

Further developments of the invention are characterized by the features of the additional claims.

Through the teaching according to the invention it is possible to incorporate a quantity of fuel in the fuel rods which is necessary for obtaining an acceptable reactivity while at the same time achieving a flow area in the fuel assembly which is necessary for obtaining an acceptable fall of pressure. The fact that it is possible in this way to reduce the thickness of the cladding tube has to do with the fact that it has proved to be possible to keep the gas pressure in the fuel rod at a lower level than in the previously supplied assemblies. This is due to the fact that the departure of fission gases in the fuel can be suppressed because of the possibility of maintaining a lower temperature of the fuel.

The fuel pellets in the fuel rods preferably have a diameter of 7,4 - 8,8 mm. This diameter is preferably 0,14 - 0,20 mm smaller than the internal diameter of the cladding tubes. The distance between the envelope surfaces of two fuel rods located in the same row of fuel rods in a sub-bundle preferably amounts to 2,4 - 3,9 mm and the distance between a fuel rod, located adjacent to a side wall in the fuel channel, and said wall as well as the distance between a fuel rod, located adjacent to a wall in the channel for water, and said wall in the channel preferably amount to 2,0 -4,0 mm. The width of that part of the channel for water which is located between two adjoining sub-bundles is preferably 3,0 - 8,0 mm. In certain cases a width of 6,0 - 8,0 mm is preferable. The distance between the spacers in a sub-bundle may advantageously amount to 400-600 mm.

In the fuel assembly according to the invention, a low internal form factor is attained because of the existence of the water channel with a cruciform cross-section. It permits the use of a greater axial form factor, which can be utilized for fuel saving by arranging pellets of oxide of natural uranium at the ends of the fuel rods.

According to an advantageous embodiment of the invention, the centre rod in each sub-bundle containing 5x5 rods is used as a tie rod for the sub-bundle. The centre rod can then be used for carrying fuel. However, it can also he used as a tie rod in the form of a water-filled rod. In both cases, a desired symmetrical mechanical load can be achieved while utilizing one single rod in the sub-bundle. This centre rod, whether it is fuel-carrying or water-filled, can also be advantageously used as a spacer holder rod.

The invention will now be described in greater detail with reference to the accompanying drawings showing - by way of example - in

Figure 1     an embodiment of a fuel assembly according to the invention in a vertical section through the line I-I in Figure 2,

Figure 2 the same fuel assembly in a view perpendicular to a horizontal plane through the line II-II in Figure 1,

Figure 3 a horizontal section through the line III-III in Figure 1,

Figure 4 a fuel rod in the fuel assembly in a vertical section, and

Figure 5 the same fuel rod, on an enlarged scale, in a section perpendicular to the symmetry axis.

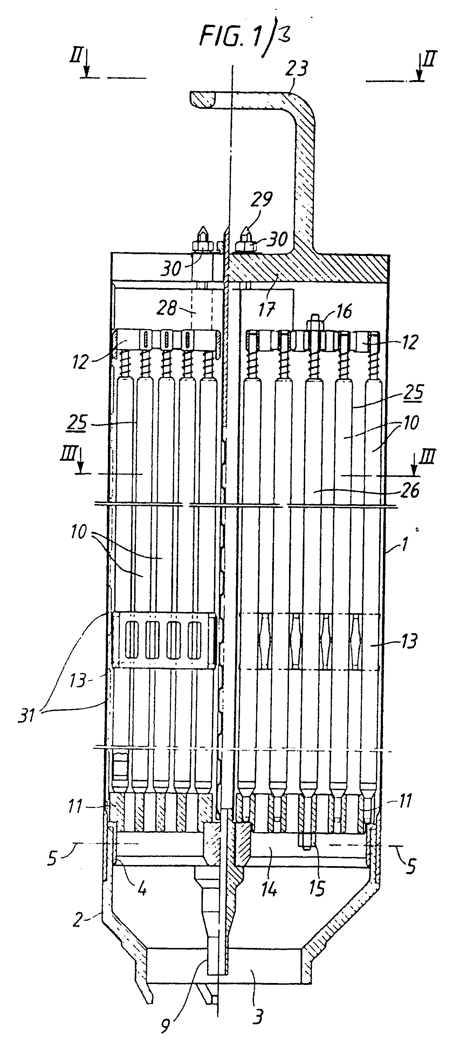

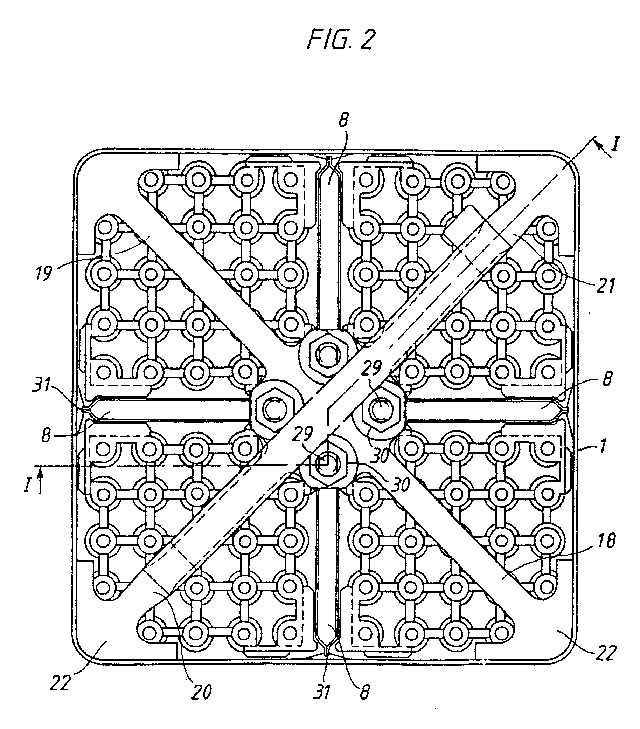

In Figures 1-3, 1 designates a fuel channel of substantially square cross-section. The fuel channel 1 surrounds, with no significant play, an upper, square portion of a bottom part 2 having a circular, downwardly facing inlet opening 3 for cooling water and moderator water. In addition to supporting the fuel channel 1, the bottom part 2 supports a supporting plate 4. At its bottom the fuel channel 1 has a relatively thick wall portion which is fixed to the bottom part 2 and the supporting plate 4 by means of a plurality of horizontal bolts, indicated by means of dash-dotted lines 5. The fuel channel 1 is divided into four vertical sub-channels 6 by means of a hollow channel-forming member 7 of cruciform cross-section which forms the above-mentioned vertical channel for water, and which is welded to the four walls 1a,1b,1c and 1d of the fuel channel 1. The channel-forming member 7 has four hollow wings 8. At the bottom the channel-forming member 7 is connected to an inlet tube 9 for moderator water. The sub-channels 6 each contain one sub-bundle 25 containing twenty-five fuel rods 10. The rods are arranged in a symmetrical lattice in five rows, each containing five rods. Each rod is included in two rows perpendicular to each other. The distance between a rod and an adjacent rod is the same in each of said two perpendicular rows. Each sub-bundle is arranged with a grid-like bottom tie plate 11, a grid-like top tie plate 12 and a plurality of spacers 13. The fuel channel 1, the channel-forming member 7 and the spacer 13 are all of a zirconium alloy, such as Zircaloy 4. The four bottom tie plates 11 are supported by the supporting plate 4 and are each partially inserted into a respective square hole 14 therein. In each sub-bundle at least one of the fuel rods is made with relatively long, threaded end plugs, the lower end plug being passed through the bottom tie plate 11 and being provided with a nut 15, the upper end plug being passed through the top tie plate 12 and being provided with a nut 16. In the embodiment shown it is the centre rod 26 which is formed in this way. This rod serves as a spacer holder rod.

An upper end portion of the fuel channel 1 surrounds a cruciform lifting plate 17 having four horizontal arms 18,19,20 and 21, which extend from a common central portion. At its outer end each arm has a portion 22 in the form of an arrow-head. In each corner of the fuel channel 1 each of these portions 22 makes contact with the inner wall surface of the fuel channel 1. A lifting handle 23 is fixed at the arms 20 and 21. The lifting plate 17 and the lifting handle 23 together may form a solid-cast lifting member of steel. The lifting plate 17 is fixed to the channel-forming member 7 by inserting each of four vertical bars 28 into a respective wing 8 of the channel-forming member 7 and welding them thereto. At the top each bar 28 has a vertical, bolt-like portion 29 which is passed, with a play, through a corresponding hole in the central portion of the lifting plate 17 and is provided with a nut 30. As will be clear from the figures, the fuel channel 1 is provided with indentations 31, intermittently arranged in the longitudinal direction, against which the wings of the channel-forming member 7 are welded.

The cladding tube of the fuel rods has a wall thickness of 0,50 - 0,70 mm and an outer diameter of 8,5 - 10,3 mm.

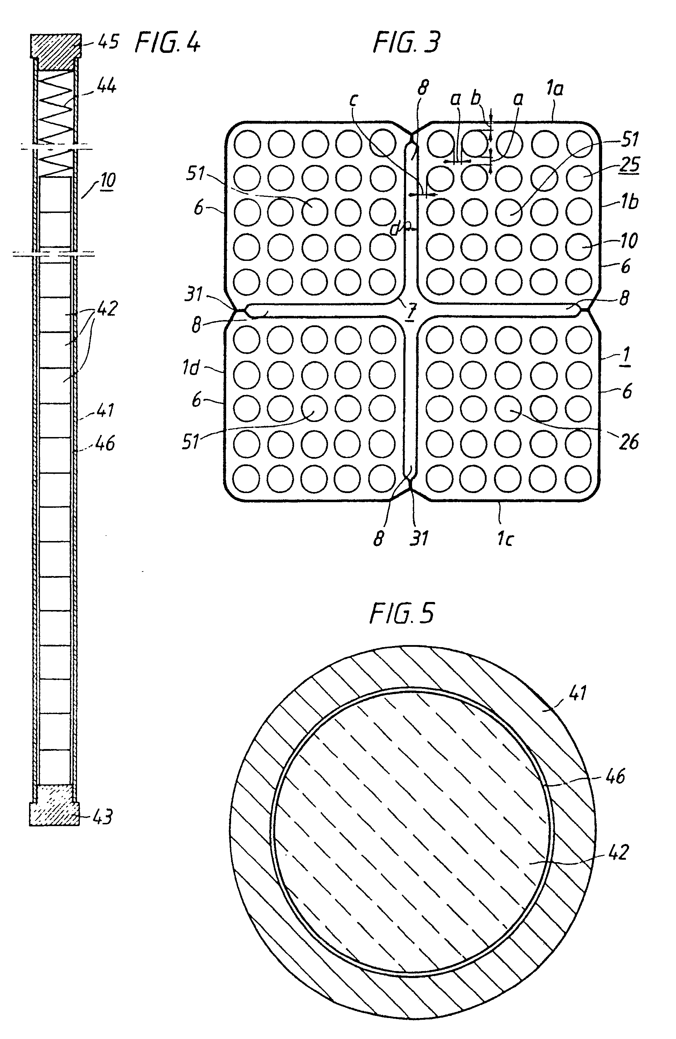

The distance a (Figure 3) between two fuel rods located adjacent to each other in the same row is, in the exemplified case, 3,0 mm. This applies to both of the rows which are perpendicular to each other and in which each fuel rod is included. The distance b between a fuel rod, located adjacent to a wall in the fuel channel 1, and said wall amounts to 2,8 mm. This is also true of the distance c between a fuel rod, located adjacent to a wall of the channel-forming member 7, and said wall of the channel-forming member. The width d of that part 8 of the channel-forming member which is located between two adjacent sub-bundles 25 is, in the exemplified case, 6 mm.

As will be clear from Figures 4 and 5, each fuel rod 10 includes a cladding tube 41, made of a zirconium alloy, such as Zircaloy 2. The cladding tube 41 has a length of about four meters and contains about 300 circular-cylindrical pellets 42 stacked one above the other in the axial direction of the tube. The pellets have a height of 11 mm and a diameter of 8,0 mm. With the exception of the pellets located nearest to each end of the fuel rods, which pellets consist of oxide of natural uranium, the pellets consist, in a conventional manner, of uranium dioxide, which is enriched with respect to U 235. The bottom pellet rests rigidly on an end plug 43 welded to the lower end of the rod, and the top pellet is pressed downwards by a helical spring 44 which is tightened against an end plug 45 welded to the upper end of the tube. The pellets are ground to such dimensions as to form a play 46 between the envelope surface of the pellet and the inner wall of the cladding tube. In the exemplified case, the thickness of the cladding tube amounts to 0,60 mm and its outer diameter to 9,4 mm. The fuel rod is filled with helium with a pressure of 4 MPa.

In the embodiment shown the center rod 26, instead of being formed as a fuel-carrying rod used as a spacer holder rod, may be formed as a water-filled tie rod and/or a spacer holder rod. Also certain of the remaining rods in each sub-bundle may be formed as water-filled rods instead of as fuel rods.

## Claims

1. A nuclear fuel assembly comprising a plurality of vertical fuel rods (10) and possibly occasional water-filled rods, which are surrounded by a fuel channel (1) of substantially square cross-section and which are divided, by means of a vertical channel (7,8) for water of substantially cruciform cross-section, into four groups, each group forming a sub-bundle (25), each fuel rod containing a stack of nuclear fuel pellets (42), arranged in a cladding tube (41), each sub-bundle consisting of a total of 25 fuel rods some of which may be water-filled rods, arranged in a lattice of 5x5 rods, **characterized** in that the cladding tube of the fuel rods having a wall thickness of 0,50 - 0,70 mm and an outer diameter of 8,5 - 10,3 mm.

2. A nuclear fuel assembly according to claim 1, **characterized** in that the pellets (42) of the nuclear fuel have a diameter of 7,4 - 8,8 mm.

3. A nuclear fuel assembly according to claim 1 or 2, **characterized** in that the diameter of the pellets (42) is 0,14 - 0,20 mm smaller than the inner diameter of the cladding tube (41).

4. A nuclear fuel assembly according to any of the preceding claims, **characterized** in that the distance between the envelope surfaces of two fuel rods (10), located adjacent to each other in the same row of fuel rods in one sub-bundle (25) amounts to 2,4 - 3,9 mm.

5. A nuclear fuel assembly according to any of the preceding claims, **characterized** in that the distance between a fuel rod (10), located adjacent to a wall of the fuel channel (1), and said wall, as well as the distance between a fuel rod (10), located adjacent to a wall of the vertical channel (7,8) for water, and said wall amount to 2,0 - 4,0 mm.

6. A nuclear fuel assembly according to any of the preceding claims, **characterized** in that the width of that part (8) of the vertical channel (7,8) for water having a cruciform cross-section, which is located between two adjacent sub-bundles (25), amounts to 3,0 - 8,0 mm.

7. A nuclear fuel assembly according to any of the preceding claims, **characterized** in that at least some of the fuel rods (10) are arranged, at their ends, with pellets of oxide of natural uranium.

8. A nuclear fuel assembly according to any of the preceding claims, **characterized** in that the rod (26) in the form of a fuel rod or a water-filled rod, which is located at the centre of each sub-bundle (25), is utilized as a tie rod in the sub-bundle.

9. A nuclear fuel assembly according to any of the preceding claims, **characterized** in that the rod (26) in the form of a fuel rod or a water-filled rod, which is located at the centre of each sub-bundle (25), is utilized as a spacer holder rod in the sub-bundle.

## Revendications

1. Assemblage combustible nucléaire comprenant plusieurs crayons combustibles (10) verticaux et, le cas échéant, parfois des crayons emplis d'eau, qui sont entourés d'un boîtier-canal (1) de section transversale sensiblement carrée et qui sont subdivisés au moyen d'un canal vertical (7, 8) pour de l'eau, de section transversale sensiblement cruciforme en quatre groupes, chaque groupe formant une sous-grappe (25), chaque crayon combustible contenant un empilement de pastilles (42) de combustible nucléaire disposées dans un tube de gainage (41), chaque sous-grappe consistant en un total de 25 crayons combustibles, dont certains peuvent être des crayons emplis d'eau, disposés suivant un réseau de 5 x 5 crayons, caractérisé en ce que le tube de gainage des crayons combustibles a une épaisseur de parois de 0,50 à 0,70 mm et un diamètre extérieur de 8,5 à 10,3 mm.

2. Assemblage combustible nucléaire suivant la revendication 1, caractérisé en ce que les pastilles (42) du combustible nucléaire ont un diamètre de 7,4 à 8,8 mm.

3. Assemblage combustible nucléaire suivant la revendication 1 ou 2, caractérisé en ce que le diamètre des pastilles (42) est plus petit de 0,14 à 0,20 mm que le diamètre intérieur du tube de gainage (41).

4. Assemblage combustible nucléaire suivant l'une quelconque des revendications précédentes, caractérisé en ce que la distance entre les surfaces qui englobent deux crayons combustibles (10) adjacents l'un à l'autre dans la même rangée de crayons combustibles d'une sous-grappe (25) est comprise entre 2,4 et 3,9 mm.

5. Assemblage combustible nucléaire suivant l'une quelconque des revendications précédentes, caractérisé en ce que la distance entre un crayon combustible (10) adjacent à une paroi du boîtier-canal (1) et cette paroi, ainsi que la distance entre un crayon combustible (10) adjacent à une paroi du canal vertical (7, 8) pour l'eau et cette paroi, est comprise entre 2,0 et 4,0 mm.

6. Assemblage combustible nucléaire suivant l'une quelconque des revendications précédentes, caractérisé en ce que la largeur de la partie (8) du canal vertical (7, 8) pour l'eau, de section transversale cruciforme, qui est disposée entre deux sous-grappes (25) adjacentes, est comprise entre 3,0 et 8,0 mm.

7. Assemblage combustible nucléaire suivant l'une quelconque des revendications précédentes, caractérisé en ce qu'au moins certains des crayons combustibles (10) comportent, à leurs extrémités, des pastilles d'oxyde d'uranium naturel.

8. Assemblage combustible nucléaire suivant l'une quelconque des revendications précédentes, caractérisé en ce que le crayon (26), sous la forme d'un crayon combustible ou d'un crayon empli d'eau, qui est disposé au centre de chaque sous-grappe (25), est utilisé comme crayon d'assemblage dans la sous-grappe.

9. Assemblage combustible nucléaire suivant l'une quelconque des revendications précédentes, caractérisé en ce que le crayon (26), sous la forme d'un crayon combustible ou d'un crayon empli d'eau, qui est disposé au centre de chaque sous-grappe (25), est utilisé comme crayon d'entretoisement dans la sous-grappe.

## Patentansprüche

1. Kernbrennelementbündel mit einer Vielzahl von vertikalen Brennstäben (10) und möglicherweise gelegentlich mit Wasser gefüllten Stäben, die von einem Brennelementkasten (1) mit im wesentlichen quadratischem Querschnitt umgeben sind und die mittels eines vertikalen Kanals (7, 8) für Wasser mit im wesentlichen kreuzförmigem Querschnitt in vier Gruppen unterteilt sind, von denen jede Gruppe ein Teilbündel (25) bildet, wobei jeder Brennstab einen Stapel von Kernbrennstofftabletten (42) enthält, die in einem Hüllrohr (41) untergebracht sind, und jedes Teilbündel aus 25 Brennstäben besteht, die in einem Gitter von 5 x 5 Stäben angeordnet sind, von denen einige wassergefüllte Stäbe sein können, **dadurch gekennzeichnet,** daß das Hüllrohr der Brennstäbe eine Wanddicke von 0,50 bis 0,70 mm und einen Außendurchmesser von 8,5 bis 10,3 mm hat.

2. Kernbrennelementbündel nach Anspruch 1, **dadurch gekennzeichnet,** daß die Brennstofftabletten (42) einen Durchmesser von 7,4 bis 8,8 mm haben.

3. Kernbrennelementbündel nach einem der Ansprüche 1 oder 2, **dadurch gekennzeichnet,** daß der Durchmesser der Tabletten (42) 0,14 bis 0,20 mm kleiner ist als der innere Durchmesser des Hüllrohres (41).

4. Kernbrennelementbündel nach einem der vorhergehenden Ansprüche, **dadurch gekennzeichnet,** daß der Abstand zwischen der Mantelfläche zweier benachbarter Brennstäbe (10) in derselben Brennstabreihe eines Teilbündel (25) 2,4 bis 3,9 mm beträgt.

5. Kernbrennelementbündel nach einem der vorhergehenden Ansprüche, **dadurch gekennzeichnet,** daß der Abstand zwischen einem benachbart zu einer Wand des Brennelementkastens (1) liegenden Brennstabes (10) und der genannten Wand sowie der Abstand zwischen einem benachbart zu einer Wand des vertikalen Wasserkanals (7, 8) liegenden Brennstabs (10) und der genannten Wand 2,0 bis 4,0 mm beträgt.

6. Kernbrennelementbündel nach einem der vorhergehenden Ansprüche, **dadurch gekennzeichnet,** daß die Breite desjenigen Teiles (8) des mit kreuzförmigem Querschnitt aufgebauten vertikalen Wasserkanals (7, 8), welches zwischen zwei benachbarten Teilbündeln (25) liegt, 3,0 bis 8,0 mm beträgt.

7. Kernbrennelementbündel nach einem der vorhergehenden Ansprüche, **dadurch gekennzeichnet,** daß mindestens einige der Brennstäbe (10) an ihren Enden mit Tabletten aus Natur-Uranoxyds versehen sind.

8. Kernbrennelementbündel nach einem der vor-

hergehenden Ansprüche, **dadurch gekenn-zeichnet,** daß der als Brennstab oder als wassergefüllter Stab ausgebildete Stab (26), der im Zentrum jedes Teilbündels (25) liegt, als Verbindungsstab in dem Teilbündel dient.

9. Kernbrennelementbündel nach einem der vor-hergehenden Ansprüche, **dadurch gekenn-zeichnet,** daß der als Brennstab oder als wassergefüllter Stab ausgebildete Stab (26), der im Zentrum jedes Teilbündels (25) liegt, als Abstandshalterstab in dem Teilbündel dient.

EP 0 219 038 B1

FIG. 1/3

## FIG. 2

EP 0 219 038 B1

FIG. 4

FIG. 3

FIG. 5